# EUROPEAN PATENT APPLICATION

(11) **EP 1 523 154 A1**
(43) Date of publication of application: **13.04.2005**
(21) Application number: 03292490.4
(22) Date of filing: 08.10.2003
(51) Int. Cl.: H04L 29/08, H04L 12/28, H04L 29/06

(54) **System and method for offering push services to a mobile user using a push proxy which monitors the state of the mobile user equipment**

(71) Applicant: FRANCE TELECOM, 75015 Paris (FR)
(72) Inventor: Patel, Jogesh, West Hendon London NW9 6AP (GB)
(74) Representative: DeVile, Jonathan Mark, Dr.

(57) **Abstract**

A system is arranged to push content information to mobile user equipment. The data is pushed in the sense that the content is communicated to the mobile user equipment without the mobile user equipment explicitly initiating a request for the content. The system comprises an applications server operable to provide data representative of the content for communication to the mobile user equipment and a push proxy. The push proxy is operable to monitor a quality-of-service, which is currently available for communicating the content data to the mobile user equipment. The push proxy is operable to provide an indication to the applications server of the currently available quality-of-service. The applications server or the push proxy is operable to communicate the content data to the mobile user equipment in accordance with the currently available quality-of-service. For example, the quality-of-service may indicate a currently available communications bandwidth, which can be used to support the communication of the content data. The communications bandwidth may be determined for example by a type of communications interface provided by an access network which is currently available to the mobile user equipment for communicating the content. In other examples a current location of the mobile user equipment can be used by the applications server to select data which is appropriate for pushing to the mobile based upon its location.

## Description

### Field of the Invention

The present invention relates to systems and methods for pushing content information to mobile user equipment.

### Background of the Invention

A push service as described for example, in 3GPP TR 23.875 V5.1.0 (2002-03) "Support of Push Service (Release 5)" provides a facility for communicating data to a mobile user equipment even though the mobile has not made an explicit request for the data. A push transaction is initiated by, for example, a content provider without there being an explicit request from the mobile user equipment before the content provider (the push initiator) initiates a communication of content data to the mobile user equipment. Thus the term "push" is used in the context of providing data to a mobile user equipment without there being a previous initiation for a communication from the mobile. Typically, the user of the mobile equipment subscribes to a push service because for example the user wishes to receive current affairs information such as sporting event results or current business information. Another example of a push service is where a user wishes to receive video clips relating to current or future releases of films or television programmes.

International patent application WO0195592 discloses a mobile Internet Protocol (IP) push service system. The push service system includes a subscription database containing subscriber profile information for mobile subscribers and a push server for retrieving proximity related information based on the subscriber profile information. The proximity related information provides a geographical location of the mobile. A wireless network is capable of data transmission for pushing the proximity related information to the mobile subscribers based upon the subscriber profile information, the wireless network establishing a continuous connection between the push server and the mobile subscribers. The proximity related information is provided to the mobile, after the mobile informs the push server of its location using for example a Global Positioning System receiver. Alternatively, the mobile may receive proximity related information, by arranging for the wireless network to include a plurality of broadcast antennas each of which provides a facility for radio communications within a particular geographical location. By transmitting information, which is related to the particular geographical location served by a broadcast antenna, proximity related information is provided to the mobile.

International patent application WO03019973 discloses a system and method for addressing a mobile device in an internet protocol based wireless network. A push service is provided to mobile devices. Push service providers prepare data for transmission to a wireless mobile user equipment using a first IP address, which identifies the mobile equipment. The data is transmitted to the push proxy, which is routed using the address. The push proxy obtains a network identifier that is permanently associated with the mobile user equipment using the first address. The network identifier is then used by the push proxy to obtain a second IP address that is temporarily associated with the mobile equipment. Using this second IP address the data from the push proxy is addressed and transmitted to the wireless mobile equipment via a tunnel created through the wireless network using the second IP address.

### Summary of Invention

According to the present invention there is provided a system for pushing content information to mobile user equipment. The system comprises an applications server operable to provide data representative of the content information for communication to the mobile user equipment and a push proxy. The push proxy is operable to monitor a currently available quality-of-service for communicating the content data to the mobile user equipment. The push proxy is operable in combination with the applications server to arrange for the content data to be communicated to the mobile user equipment in accordance with the currently available quality-of-service.

The present invention seeks to provide improvements in systems for pushing content information to mobile user equipment and in particular with respect to an efficiency with which content information is pushed to the mobile user equipment.

With the development of third generation mobile radio networks as well as other wireless communications facilities such as Wireless Local Area Networks, the conditions for communicating data to mobile user equipment may vary in dependence upon the location of the mobile equipment. This is because the mobile equipment's location will determine which of a plurality of access networks is available to the mobile user equipment for communicating data. Furthermore, the Universal Terrestrial Access Network (UTRAN) provides a facility for changing the quality-of-service in accordance with currently experienced radio communication conditions. Accordingly, for a mobile user equipment, the quality-of-service for communicating data is likely to vary, for example in accordance with current radio communication conditions, or the type of access network currently available to the mobile user equipment. Embodiments of the present invention seek to push content data to the mobile user equipment in accordance with a currently available quality-of-service.

The quality-of-service available may be determined for example by the type of access network which is available to the mobile equipment, which thereby determines a communications bandwidth which is available for communicating data representing the content information in accordance with the communications interface operated by the access network. The applications server may adapt the representation of the content data or the form in which the content data is to be communicated so that the content data can be communicated to the mobile user equipment using the available communications bandwidth.

In one example embodiment, the push proxy provides an indication that a predetermined quality-of-service, which can support a predetermined communications bandwidth, is currently supportable. The applications server is operable to communicate the content data to the user equipment in a form, which can be supported by the predetermined communications bandwidth. The applications service in combination with the push proxy may therefore wait until such time that a sufficient quality-of-service is available before communicating the content data to the mobile equipment.

In another example embodiment, the push proxy determines a currently available quality-of-service, the current quality-of-service providing a communications bandwidth for communicating data to the mobile user equipment. For this example, the applications server may be operable to adapt the representation of the content data in accordance with the currently available communications bandwidth, and to arrange for the adapted representation of the content data to be communicated to the mobile equipment. Thus, for this example, the applications server does not wait for a quality-of-service required for communicating the content data in a given form to become available, but adapts the form of the content data to match a communications bandwidth which is supportable using the available quality-of-service. For example, the form of the data may change from an audio/video service to an audio representation only service, if the current bandwidth can only support an audio representation. In another example the applications server may be operable to adapt the representation of the content data by changing the amount of data, which is required to represent the content. This may be effected, for example, by adapting an amount of data compression, which is applied to the representation of the content.

According to another aspect of the present inventions there is provided a system for pushing content information to a mobile user equipment via at least one access network, communication with the mobile user equipment via the access network being effected using the internet protocol. The system comprises an applications server operable to provide data representing the content information for communication to the mobile user equipment, and a push proxy. The push proxy is operable to maintain a current internet protocol address of the mobile user equipment, the push proxy being operable to provide an indication of the location of the mobile user equipment based upon the current internet protocol address of the mobile user equipment.

Embodiments of the present invention utilise a push proxy which is operable to provide a relative location of mobile user equipment using a current IP address of the mobile user equipment. For such embodiments, the applications server may be responsive to the location information to communicate selectively content data items to the mobile user equipment in accordance with the location of the mobile. The content data may be selected in accordance with the location. For example the location information may indicate that the mobile equipment is in the vacinity of a shopping area, public building or public transport terminal. Accordingly, the content data can be selected to include information, which is pertinent to the location of the mobile terminal. For example, the content data may include information relating to advertisements and discounts for particular stores when the mobile equipment is in the vicinity of a shopping area. If the mobile equipment is in the vicinity of a public building, the content data may include information relating to opening times, or for a public transport facility information relating to time tables for transport.

In one embodiment the push proxy may include a home agent operable to maintain a current mobile internet protocol address of the mobile user equipment, the location indication being based on the mobile internet protocol address of the mobile user equipment.

Various further aspects and features of the present invention are defined in the appended claims and include an applications server and a push proxy.

### Brief Description of the Drawings

Embodiments of the present invention will now be described by way of example only with reference to the accompanying drawings, where like parts are provided with corresponding reference numerals, and in which:
Figure 1 is a schematic block diagram of a system for pushing content to a mobile user equipment;
Figure 2 is a schematic block diagram of parts shown in Figure 1 which are arranged to push content to the mobile user equipment in accordance with current conditions for communicating;
Figure 3 is a schematic block diagram illustrating in more detail a push proxy which appears in Figures 1 and 2;
Figure 4 is a flow diagram illustrating the operation of the system for pushing content to a mobile user equipment;
Figure 5 is a flow diagram illustrating the operation of the system for pushing content, the content being pushed to a mobile user equipment when a quality-of-service can support communication of the content;
Figure 6 is a is a flow diagram illustrating the operation of the system for pushing content in dependence upon a current quality-of-service which is available for pushing the content;
Figure 7 is a schematic block diagram illustrating in more detail a push proxy which appears in Figures 1 and 2, when pushing content to a mobile user equipment based upon a current location of the mobile user equipment; and
Figure 8 is a flow diagram illustrating a process of determining a location of a mobile user equipment and pushing content to the mobile user equipment in accordance with a current location of the mobile.

### Description of Preferred Embodiments

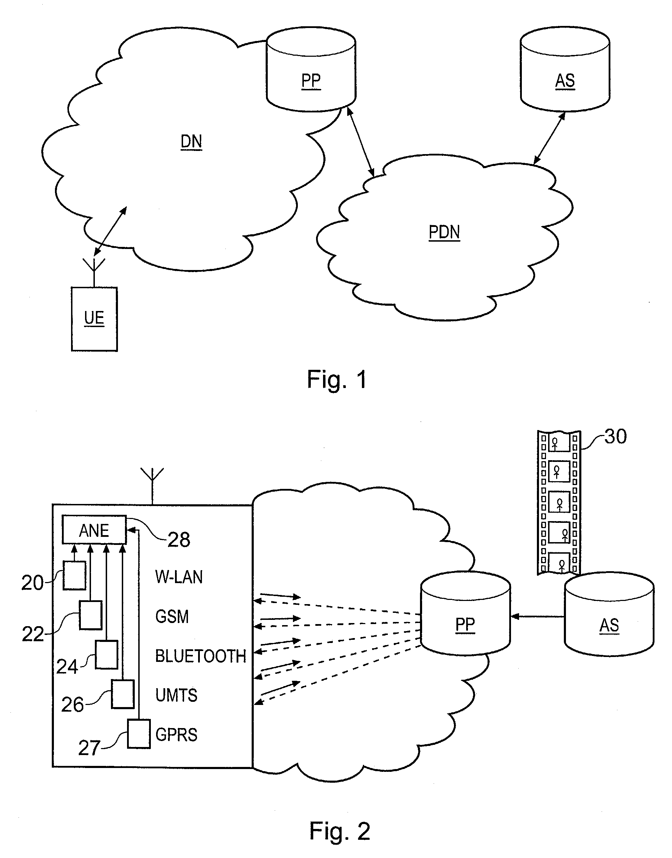

Figure 1 provides an example block diagram illustrating a system for pushing content information to mobile user equipment. According to the example embodiment a form of the content information is adapted in accordance with a current quality-of-service which is available for pushing data to the mobile user equipment. In another example, the location of the mobile user equipment may be determined from a current internet protocol address for the mobile user equipment. The location indication is used to select the content of the information which to be pushed to the mobile.

In Figure 1 an applications server AS is connected to a push proxy PP via a packet data network PDN that may include an internet and/or intranet operating in accordance with the Internet Protocol (IP). The applications server AS may also communicate with the push proxy PP in accordance with IP. The push proxy PP can behave as an HTTP, as an e-mail or a WAP based push proxy. The push proxy PP resides within an operator network and performs an interface function between a delivery network DN and the applications server AS. In Figure 1 the delivery network DN comprises a plurality of wireless access networks which may be operable in accordance with different wireless access interfaces, which can provide a different quality-of-service to the mobile user equipment. The mobile user equipment UE is therefore provided with different bearer services using the delivery network DN from which data representing the content information can be pushed to the UE using these bearer services. The delivery network may also communicate data to the UE using the IP, one example of which is Ipv6.

The delivery network DN is comprised of a plurality of access networks each of which is operable in accordance with a different wireless interface standard. Figure 2 provides a more detailed illustration of parts in Figure 1 which are associated with pushing the content data to the mobile user equipment UE from the applications server AS through the push proxy PP via one of a plurality of wireless access networks to the mobile user equipment UE. As shown in Figure 1 the mobile user equipment UE is provided with five wireless access devices 20, 22, 24, 26, 27 which respectively operate in accordance with a Wireless Local Area Network interface WLAN, a GSM interface, a Bluetooth interface, Universal Mobile Telecommunications System (UMTS) interface and a General Packet Radio Service (GPRS) interface. Each of the wireless access devices 20, 22, 24, 26, 27 provides a facility for communicating data to and/or from the mobile user equipment. Thus the wireless access devices utilise different wireless access interfaces which may be available at different locations as the mobile user equipment roams through a geographical area served by the delivery network DN. For example, a Wireless-LAN WLAN may only be available within an office environment, within a building. In contrast, the GSM network may be more prevalent and form an umbrella for communications with the mobile user equipment over a wide geographical area. Similarly, the Bluetooth access device forms a wireless access interface for short range communications, whereas the UMTS access device provides a facility for communicating via the Universal Terrestrial Radio Access Network (UTRAN) interface. The UMTS access device provides a third generation-type communication facility for communicating using variable bit rates in accordance with current radio communication conditions.

As will be explained the system illustrated in Figures 1 and 2 provides a contextual push service to mobile subscribers based upon either the location of the mobile user equipment or the quality-of-service available for communicating data using the mobile user equipment. According to one example, data is communicated with the mobile user equipment using Mobile IPv6 Internet Protocol, although it will be appreciated that this is only one example technique for communicating data to the mobile user equipment in accordance with a push service. According to embodiments of the invention, the push proxy PP is provided with mobility enhancement to the effect that the push proxy PP can receive information pertaining to current quality-of-service parameters of access networks available to the mobile user equipment. The push proxy PP may also determine a current relative location of the mobile user equipment.

An example embodiment of the present invention will be explained in which the push proxy provides an indication of a current quality-of-service available to the mobile user equipment. The applications server can then adapt the form of the content data for pushing to the mobile user equipment in accordance with the currently experienced quality-of-service.

### Quality-of-service Based Push Service

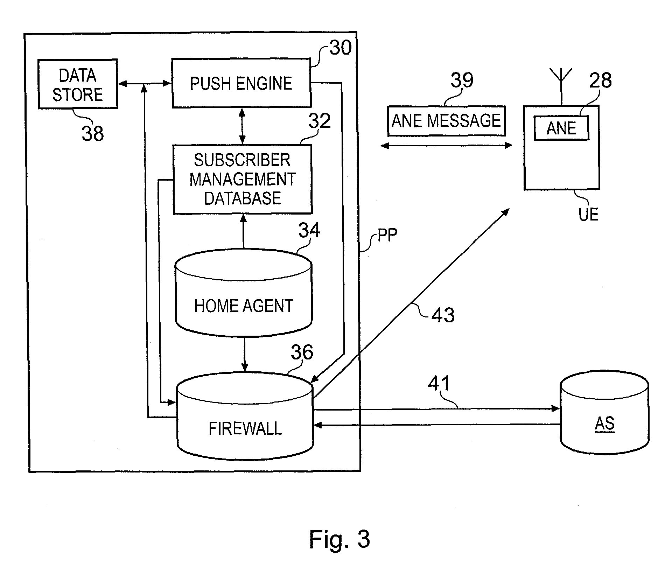

Figure 3 provides an example block diagram of a push proxy according to an example embodiment of the present invention. As will be explained the push proxy provides mobility-enhanced information to the effect that it monitors both a current quality-of-service available to mobile user equipment and mobility information pertaining to the location of a particular mobile user equipment. For the example embodiment shown in Figure 3, the quality-of-service and the location of the mobile user equipment are monitored by utilising mobile IPv6 although it will be appreciated that in other embodiments other means will be used for monitoring the quality-of-service and the location of the mobile.

In Figure 3 the push proxy PP comprises a push engine 30, a subscriber management database 32, a home agent 34 and a firewall 36. The push engine is operable to receive push messages from the applications server AS requesting the push engine 30 to push data to the mobile user equipment. The push engine 30 has a data store 38 for storing push content for forwarding to the mobile user equipment. The push engine interrogates the subscriber management database 32 to ascertain whether it is currently possible to communicate the content to the mobile user equipment. If it is possible to send the content data to the mobile user equipment then the content data is communicated to the mobile user equipment by the push engine 30.

The subscriber management database 32 manages push subscriptions for users. The subscriber management database 32 stores a "push profile". The push profile for example provides for each user information appertaining to services for which the user has registered. The information may include a type of billing tariff selected and optionally an indication of current capabilities of a mobile user equipment to receive content data. The subscriber management database 32 also stores a number of characteristics for each of the wireless access interfaces that are provided within the delivery network DN for delivering content to the mobile user equipment in accordance with a contextual push. The subscriber management database 32 may, in some embodiments, include an indication of a location of the user equipment. This location indication is received from the home agent 34.

The firewall 36 is provided as an edge router for the delivery network DN and interfaces with the packet data network PDN and provides security control for pushing content that passes through the push proxy PP.

### Network Quality-of-Service Information

In one embodiment, the push proxy of Figure 3 monitors a quality-of-service which is currently available to communicate data to the mobile user equipment. In order to monitor a quality-of-service provided by the delivery network DN, the subscriber management database 32 exchanges access network evaluation messages 39 with the mobile user equipment UE. As illustrated in Figures 2 and 3 the mobile user equipment UE includes an Access Network Evaluation (ANE) application 28 which sends access network evaluation (ANE) messages 39 to the push proxy PP. The ANE messages may be sent periodically to the push proxy, although in other examples an ANE message may be sent once on demand from the push proxy. The ANE messages 39 include information pertaining to a network quality-of-service which can be supported, for example an available bandwidth for communicating content data, an amount of delay, a timing jitter or packet loss or other characteristics for data communications which are available via any of the wireless access interfaces 20, 22, 24, 26, 27 shown in Figure 2. The ANE messages 39 can be sent in a destination option part of the IPv6 header and can relate to all network interfaces, which are active on the mobile user equipment UE. As such, the ANE application 28 in the user equipment UE is employed to monitor a signal level, a bit error rate, an available bandwidth or other characteristics which pertain to a quality-of-service of any of the access networks available to the user equipment. Periodically information is generated by the ANE application 28 which provides a report on a current quality-of-service which is available via each of the access networks. This report information is sent to the push proxy PP. The reports are collated by the subscriber management database 32. The subscriber management database collates the quality-of-service reports from the mobile user equipment to provide an indication of for example a best available quality-of-service for that mobile user equipment for communicating content data as part of a contextual push service. Accordingly, the subscriber management database assimilates the access network evaluation messages 39 provided by the ANE application 28 to provide a current indication of a quality-of-service which is available to support a push of content data to the mobile user equipment. In an alternative arrangement the push proxy may form an indication of a least expensive quality-of-service available for communicating the content data, and as will be appreciated other criteria could be defined for reporting the available quality-of-service.

In one embodiment the subscriber management database 32 receives a message from the applications server AS indicating a minimum quality-of-service which must be provided in order to deliver the content. For this example, the content may be delivered in a specific form using a specific service such as for example a video service. In order to support a push for content in the form of video data a relatively high bandwidth would be required. Accordingly, if for example the mobile user equipment is provided with a Wireless LAN access device and a GSM network access device, then the video content could not be pushed to the mobile until the quality-of-service reports indicate that the Wireless LAN network was available for pushing the content. This is because a communications bandwidth provide by the Wireless LAN is relatively high, and typically high enough to support a video service, whereas a GSM network could not provide sufficient bandwidth to communicate the video content. In contrast, if the content data was in the form of an audio message then the content could be pushed to the mobile when the quality-of-service indicated that communication was possible via the GSM access device alone. Accordingly, content data received at the firewall 36 from the applications server via a communications channel 41 can be communicated via the push engine 30 and the communications channel 43 using the delivery network DN to the mobile user equipment UE, using the appropriate service.

In an alternative embodiment a push service to which a user has subscribed may generate content which is time sensitive. Accordingly, unless the content is pushed to the mobile within a predetermined time period then the relevance of the content will be lost. Examples of such time relevant content are sports results or current affairs information. For this example the subscriber management database 32 may periodically communicate with the applications server AS by sending messages to the applications server AS via the firewall 36 of a currently available quality-of-service for communicating data to the mobile user equipment. For this example the applications server AS may be operable to adapt the form of the content in accordance with an available quality-of-service. This may for example include adapting a compression ratio of the data to be communicated or may result in a change in the service, which is used to push the content to the mobile unit. If for example the quality-of-service available to the mobile user equipment can only support an audio service then the content data may be adapted by the applications server AS to be represented in the form of an audio signal only. In contrast, if the quality-of-service reported by the subscriber management database 32 indicates that a video service can be supported then the applications server may adapt the content data to be represented in the form of a video and/or audio signal for pushing to the mobile user equipment UE.

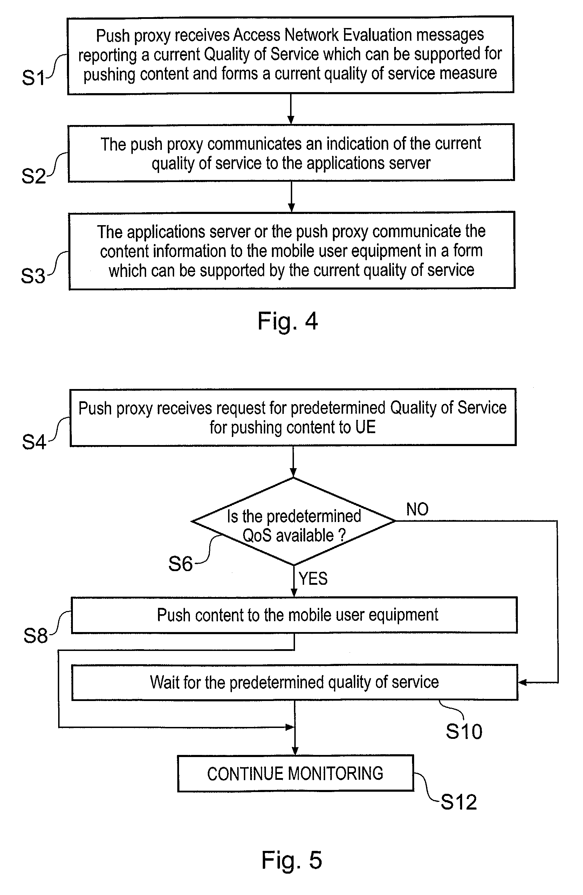

The operation of the push proxy and the applications server to provide the push service is illustrated by the flow diagrams in Figures 4, 5 and 6 which are summarised as follows:
S1: The push proxy receives access network evaluation messages reporting a current quality-of-service, which can be supported for pushing the content. As the mobile user equipment moves within a geographical area, the mobile will experience more or less favourable conditions for communicating via the respective wireless access networks. Each of the wireless access devices 20, 22, 24, 26, 27 monitors the current conditions for communicating and generates access network evaluation messages which are sent as part of an IPv6 header in an IP packet to the push proxy PP. The push proxy therefore assimilates the access network evaluation messages into a current quality-of-service measure.
S2: The push proxy provides an indication of the currently available quality-of-service to the application server.
S3: The applications server in combination with the push proxy therefore pushes content to the mobile user equipment in accordance with the current quality-of-service experienced as monitored by the push proxy.

The content may be pushed to the mobile user equipment in various ways. Figure 5 provides a flow diagram which illustrates one way in which the applications server registers a predetermined quality-of-service for pushing content to the mobile user equipment with the subscriber management database. Figure 5 is summarised as follows:
S4: The push proxy receives a request in the form of a message from the applications server for a predetermined quality-of-service. The predetermined quality-of-service is registered by the applications server as a condition for pushing content to the mobile user equipment.
S6: The push proxy determines whether the predetermined quality-of-service is currently available.
S8: If the predetermined quality-of-service is currently available to the mobile user equipment then the applications server arranges for the content to be pushed to the mobile user equipment using this quality-of-service. The content data can be pushed in several ways. For example, the push proxy can generate a message which indicates that the predetermined quality-of-service is currently available. The message is then sent to the application server. In response, the applications server can send the content data to the mobile user equipment via for example the push proxy using the firewall 36 and the push engine 30. Alternatively, the content data could be forwarded and stored within the push engine 30 in the data store 38. As soon as the required quality-of-service is available then the content would be pushed to the mobile user equipment.
S10: If the predetermined quality-of-service is currently unavailable then the push proxy continues to monitor the available quality-of-service until the predetermined quality-of-service becomes available.
S12: The push proxy continues to monitor the currently available quality-of-service by receiving the access network evaluation messages.

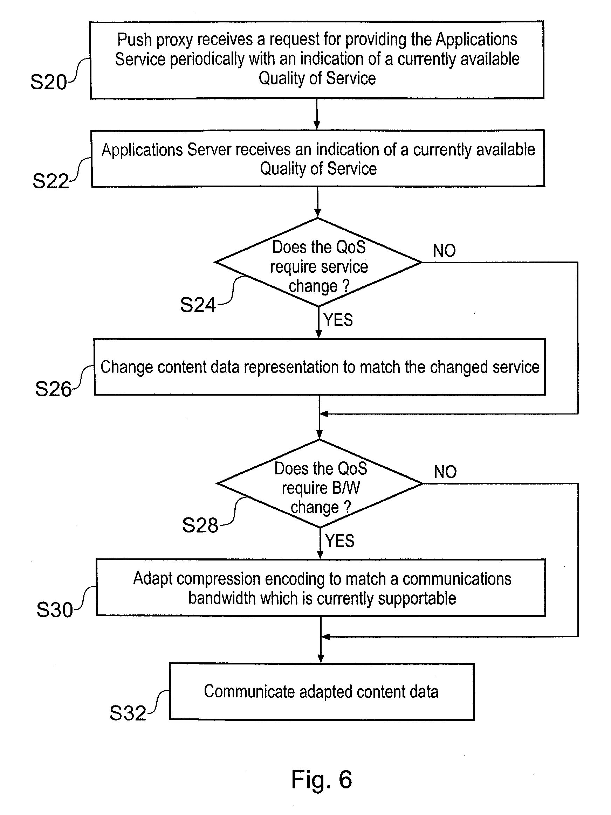

An alternative arrangement for pushing content to the mobile user equipment for time sensitive content is illustrated by a flow diagram in Figure 6. Figure 6 is summarised as follows:
S20: The applications server registers a request with the push proxy to provide the applications server periodically with an indication of a currently available quality-of-service.
S22: The push proxy receives the access network evaluation messages and as with the example illustrated in Figure 5, compiles a current indication of a quality-of-service available for pushing content data to the mobile user equipment. The push proxy then sends the message providing an indication to the applications server of a currently available quality-of-service.
S24: The applications server then determines whether the content data needs to be adapted because the quality-of-service currently available can only support a particular service. The applications server therefore assesses whether a form or representation of the content data needs to change in order for it to be communicated with the current available quality-of-service.
S26: If the form of the content data does need to be changed for example if only an audio service can be supported whereas the current form of the content data is in the form of video and/or audio information then the representation of the content data is changed to reflect the change in the service.
S28: Even if the representation of the content data does not need to change or if the representation has changed then the applications server then determines whether a further bandwidth change is required.
S30: If a change in the amount of data representing the content is needed, then a compression rate for encoding the content data is changed to match a communications bandwidth which is supportable using the currently available quality-of-service.
S32: If the bandwidth of the content data does not need to change or if it has changed then the content is pushed to the mobile user equipment.

### Location Based Information

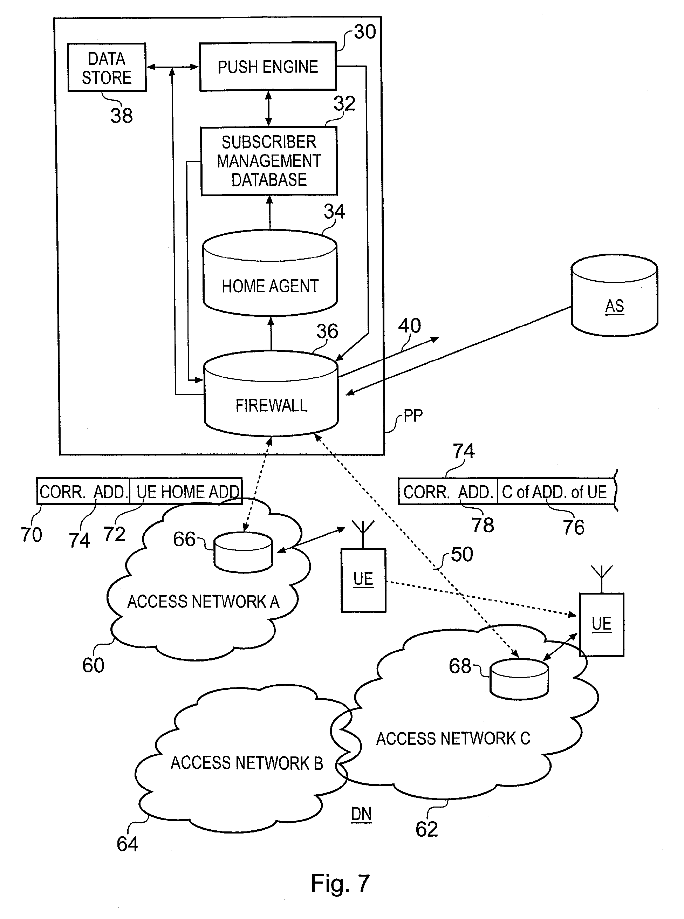

Figure 7 provides an illustrative block diagram of the push proxy PP shown in Figure 3 operating in accordance with a further example embodiment of the present invention. According to this embodiment mobility information which is provided in accordance with the operation of the mobile IPv6 protocol is utilised by the push proxy in order to provide an indication of the location of the mobile. Mobile IPv6 is a protocol that provides a facility for an IP client (in this case a mobile user equipment) to roam from one network to another whilst still maintaining a service for a user. As will be explained, mobile IPv6 utilises the Internet Protocol to allow internet packets to be communicated from the user equipment via a foreign network after the mobile user equipment has roamed from a home network.

As shown in Figure 7 the mobile user equipment UE may communicate data to and from the push proxy PP via a plurality of networks which form part of the delivery network DN shown in Figure 1. Each of the networks 60, 62, 64 may be served by an IP router 66, 68. Thus, for example, if the user equipment UE is communicating via the router 66 on network A 60, then this network could be the mobile's home network. Accordingly, the home address of the user equipment would be known to the home network and internet packets will be routed to the home network to/from the user equipment using the user equipment's home address in a destination/source address field. The internet packet 70 illustrates a packet being sent from the mobile user equipment UE when attached to network A, with the source field 72 containing the home address of the mobile and the destination address field 70 containing the address of a correspondent node.

After the user equipment has roamed to a foreign network, for example network C shown in Figure 7, then the mobile user equipment UE is provided with a care-of-address in order to allow for internet packets to be routed to network C rather than network A.

After the user equipment UE has roamed to network C 68, then in accordance with the mobile IPv6 protocol the user equipment sends a binding up-date to the home agent 34 in the push proxy PP. The binding up-date informs the home agent that the future address to be used for the user equipment is the care-of-address. Thus, the push proxy will act as a home agent for the user equipment and will store the care-of-address in association with the home address. The home agent IP address is also registered with the user equipment. Therefore internet packets sent from/to the mobile user equipment will include a care-of-address in a source/destination address field. As shown in Figure 7, the internet packets 74 being sent to the mobile user equipment UE include the mobile's care-of-address in the destination address field 76, and a correspondent node's address in the source address field 78.

Since the care-of-address is acquired from the address of the router 68 serving the access network C 62, the home agent is provided with a relative geographical location of the user equipment within the delivery network DN. This is because the care-of-address provides an indication of the access network being used by the user equipment. A process from which the mobile user equipment acquires the care-of-address will now be briefly explained, although it will be appreciated that this forms part of the IPv6 protocol.

### Acquisition of a Care-of-Address by a Mobile

The following explains how a mobile user, which is communicating in accordance with mobile IPv6, acquires a care-of-address after roaming to a foreign network from a home network, by a process known as auto-configuration. Auto-configuration can be stateless or stateful. A stateful auto-configuration is based on the use of a stateful address configuration protocol such as Dynamic Host Configuration Protocol for IPv6 (DHCPv6) to obtain addresses and other configuration options. More information concerning stateful auto-configuration is provided in IETF RFC 3315 - DHCPv6 (Stateful Auto-Configuration). A stateless configuration is based on the receipt of Router Advertisement messages. More information concerning a stateless auto-configuration can be found in IETF RFC 2462 - IPv6 Stateless Address Auto-Configuration. The following explanation of an example of an acquisition of a care-of-address is provided for a stateless configuration.

Typically, in a stateless configuration each router in an IPv6 network transmits router advertisements to all other routers and servers within the network. The router advertisements are sent out either periodically or in response to the receipt of a router solicitation message. The router advertisement contains information which is required by the user equipment in order to determine link prefixes and other information, whether or not to use an address auto configuration routine and the duration for which addresses created through auto configuration are both valid and preferred. Once a router advertisement message is received by the mobile user equipment, then the mobile user equipment will send a neighbour solicitation message to discover the link layer address of the IPv6 router in the foreign network and will include the mobile user equipment link layer address. The neighbour advertisement message is then sent by the IPv6 router in response to a neighbour solicitation message. This message provides information required by the user equipment to determine the type of neighbour advertisement message, the link layer address of the sender and the sender's role in the network. Accordingly, the user equipment can determine the addresses of routers and other configuration parameters additional addresses and on-link prefixes, which are required in order to communicate via the foreign network. The on-link prefix represents the geographical context of the location of the network and is used to auto configure the user equipment.

### Providing a Location Indication Based on an IP Address

Having auto-configured a care-of-address, a binding up-date is sent from the user equipment to the home agent within the push proxy PP providing the newly acquired care-of-address. The home agent then replies with a binding acknowledgement and stores the association between the original home address of the mobile user equipment and the care-of-address.

An access network may be uniquely associated with a particular location such as a shopping precinct, a public building or a transport building. If a mobile roams into an area which is served by an access network which is locally associated within a particular geographical area then the mobile user equipment will receive the router advertisements and perform an auto configuration as described above. Thus, following the binding up-date the care-of-address is provided to the home agent within the push proxy, the care-of-address providing an indication of the access network being used. Accordingly, the push proxy is provided with an indication of the geographical location of the mobile user equipment, which can therefore be used to push content data relevant to the location of the mobile. For example, if the mobile user equipment enters an area, which is associated with a particular store, then the content data might include advertisements and discount information relating to that store.

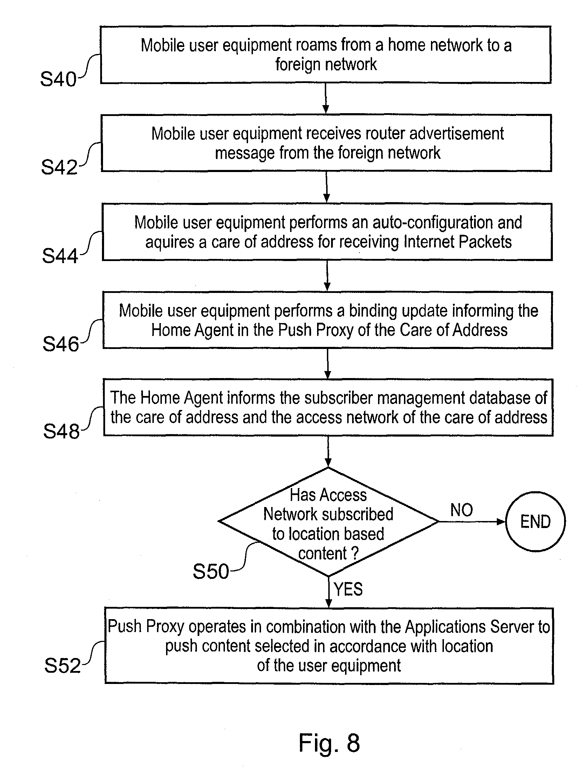

A flow diagram illustrating the operation of the push proxy to the effect of identifying the location of the mobile user equipment and pushing content data which is selected in accordance with that location is provided in Figure 8. The operation illustrated by Figure 8 is summarised as follows:
S40: The mobile user equipment roams from its home network (for example network A) to a foreign network (for example network C) and enters a radio coverage area provided by access network C.
S42: The mobile user equipment receives router advertisement messages from a router 68 within the foreign network (network C).
S44: The mobile user equipment then performs an auto configuration and according to the auto configuration process acquires a care-of-address 76 for receiving internet packets and for sending internet packets (providing a source address) using the care-of-address.
S46: The mobile user equipment then performs a binding up-date in accordance with the mobile IPv6 protocol. As part of the binding up-date the care-of-address of the user equipment which has been acquired is communicated to the home agent 34 as indicated by arrow 50 in Figure 7. The binding up-date is received by the home agent 34 within the push proxy PP and the care-of-address is extracted from the binding up-date message. The home agent 34 then stores the care-of-address in association with the home address of the mobile user equipment within the subscriber management database 32.
S50: The subscriber management database 32 then compares the access network indicated by the care-of-address with predetermined and pre-stored information identifying a geographical location served by the access network identified by the care-of-address. If the access network has been established as being associated with content specific data based on the location of the access network then content information is generated and sent to the applications server. Typically, therefore the applications server will register, with the subscriber management database 32, a location for which an access network operator has provided content specific information based on the location.
S52: The push proxy PP then operates in combination with the applications server AS to push content data which is selected in accordance with the location to the mobile user equipment. This can be done in several ways. In one embodiment the applications server AS prepares content data based on the location and once the push proxy communicates a message indicating that the user equipment has entered this location then the content is pushed to the mobile user equipment via the push proxy. Alternatively, the applications server may forward the content specific to a location to the push proxy, which is stored within the data store 38. Once the user equipment enters the location as indicated by the care-of-address which is passed from the home agent then the location specific content is communicated by the push engine 30 to the user equipment.

### Other Embodiments

Various further aspects and features of the present invention are defined in the appended claims. Various modifications may be made to the embodiments described above without departing from the scope of the present invention. For example although the illustrative embodiment communicates internet packets using the mobile IPv6 protocol, it will be appreciated that this is just one example of a communications protocol. Other protocols and techniques for identifying quality-of-service and a location of a mobile could be provided without departing from the scope of the present invention.

According to the explanation of the example embodiments it will be understood that aspects of the present invention include a system for pushing content information to mobile user equipment. The system comprises an applications server operable to provide data representative of the content information for communication to the mobile user equipment and a push proxy. The push proxy is operable to monitor a currently available quality-of-service for communicating the content data to the mobile user equipment. At least one of the applications server and the push proxy is operable to arrange for the content data to be communicated to the mobile user equipment in accordance with the currently available quality-of-service. In some embodiments the push proxy may communicate the content data, whereas in other embodiments the data may be communicated by the applications server, and in others by a combination of the push proxy and the applications server.

According to one embodiment the currently available quality-of-service provides an indication of a communications bandwidth for communicating data to the mobile user equipment, the push proxy being operable to provide an indication of the current communications bandwidth which is available. One of the applications server and the push proxy is operable to adapt the representation of the content data in accordance with the currently available communications bandwidth, the content data being communicated to the mobile user equipment in the adapted form. For example, the applications server may be operable to adapt the representation of the content data by changing the amount of data which is required to represent the content with the effect that the bandwidth of the content data is adapted in accordance with the currently available communications bandwidth. The amount of data required to represent the content data may be adapted by changing a form of the content data in accordance with a service, which is supportable using the currently available communications bandwidth. The services may include video/audio communication of the content information, audio communication of the content information and text data communication of the content information.

The content data may be communicated to the mobile user equipment by first communicating the content data to the push proxy, the push proxy being operable to store and forward the content data to the mobile user equipment.

According to another aspect of the present invention there is provided an applications server which is operable to adapt the content data in accordance with a currently available communications bandwidth.

According to another aspect of the present invention there is provided a mobile user equipment including a plurality of access devices, each of the access devices providing a facility for receiving data from an access network. An access network evaluation application is operable to determine, for at least one of the plurality of access networks, a current quality of service which is available via the access network from which the access device is arranged to receive data, and to generate an access network evaluation message. The access network evaluation message is arranged to provide information pertaining to the current quality of service determined for the access network. The application is operable to communicate the access network evaluation message to a push proxy. The access network evaluation message may be formed as an Internet Packet and communicated to the push proxy using an Internet Protocol. There is also provided a computer program forming the access evaluation network application.

## Claims

1. A system for pushing content information to a mobile user equipment, the system comprising
an applications server operable to provide data representing the content information for communication to the mobile user equipment, and
a push proxy operable to monitor a currently available quality-of-service for communicating the content data to the mobile user equipment, and in combination with the applications server to arrange for the content data to be communicated to the mobile user equipment in accordance with the currently available quality-of-service.

2. A system as claimed in Claim 1, wherein the quality-of-service provides a communications bandwidth for communicating data to the mobile user equipment, the push proxy being operable to provide an indication to the applications server that a predetermined communications bandwidth is currently supportable by the currently available quality-of-service, the content data being communicated to the user equipment in a form which can be supported by the predetermined communications bandwidth.

3. A system as claimed in Claim 1, wherein the currently available quality-of-service provides an indication of a communications bandwidth for communicating data to the mobile user equipment, the push proxy being operable to provide an indication of the current communications bandwidth which is available, and one of the applications server and the push proxy is operable to adapt the representation of the content data in accordance with the currently available communications bandwidth, the content data being communicated to the mobile user equipment in the adapted form.

4. A system as claimed in any preceding Claim, wherein the push proxy is operable to provide an indication of the location of the mobile user equipment to the applications server, and the applications server is responsive to the location indication to communicate selectively content data to the mobile user equipment in accordance with the available quality-of-service, the information content data being selected in accordance with the location of the mobile user equipment.

5. A system as claimed in Claim 4, wherein data is communicated between the push proxy and the mobile user equipment using an internet protocol via an access network, and the push proxy includes a home agent operable to maintain a current internet protocol address of the mobile user equipment, the push proxy being operable to provide an indication of the location of the mobile user equipment based upon the current internet protocol address of the mobile user equipment.

6. A system as claimed in Claim 5, wherein the internet protocol address is one of the home address of the mobile or a care-of-address provided following a change of affiliation of the mobile from one network to another.

7. A push proxy for providing a facility for transmitting content information to a mobile user equipment via at least one access network, the content information being provided by an applications server, the push proxy being operable
to monitor a current quality-of-service available for communicating content information to a mobile user equipment, and
to provide an indication to the applications server of the current quality-of-service available for communicating data representing the content information to the mobile user equipment.

8. A push proxy as claimed in Claim 7, wherein the quality-of-service includes an indication of a communications bandwidth for communicating data to the mobile user equipment, the indication provided to the applications server being an indication that a predetermined communications bandwidth is currently available.

9. A push proxy as claimed in Claim 8, wherein the quality-of-service includes an indication of a communications bandwidth for communicating data to the mobile user equipment, the indication provided to the applications server being an indication of the currently available communications bandwidth for communicating the content data.

10. A push proxy as claimed in Claim 7, 8 or 9, wherein the push proxy is operable to communicate content data to the mobile user equipment using an internet protocol via the access network, the push proxy including
a home agent operable to maintain a current internet protocol address of the mobile user equipment, and the push proxy is operable
to provide an indication to the applications server of a location of the mobile user equipment based upon the current internet protocol address of the mobile user equipment.

11. A push proxy as claimed in Claim 10, wherein the current internet protocol address is one of the home address of the mobile or a care-of-address provided following a change of affiliation of the mobile from one network to another.

12. An applications server operable to provide data representing content information for pushing to a mobile user equipment, the applications server being responsive to an indication of a currently available quality-of-service for communicating the content data to the mobile user equipment to adapt the content in accordance with the currently available quality-of-service, to the effect that the adapted content data may be communicated to the mobile unit equipment.

13. An applications server as claimed in Claim 12, wherein the quality-of-service includes an indication of a communications bandwidth for communicating data to the mobile user equipment, the indication provided to the applications server being an indication that a predetermined communications bandwidth is currently available, and the applications server is operable to communicate data to the user equipment in a form which can be supported by the predetermined communications bandwidth.

14. An applications server as claimed in Claim 12, wherein the quality-of-service includes an indication of a currently available communications bandwidth for communicating data to the mobile user equipment, and the applications server is operable to adapt the representation of the content data in accordance with the currently available communications bandwidth.

15. An applications server as claimed in Claim 12, 13 or 14, wherein the applications server is responsive to an indication of a current location of the mobile user equipment to communicate selectively content data items to the mobile user equipment in accordance with the currently available quality-of-service.

16. A method for pushing data to a mobile user equipment, the method comprising
providing data representing content information for communication to the mobile user equipment,
monitoring a currently available quality-of-service for communicating the content data to the mobile user equipment, and
communicating the content data to the mobile unit in accordance with the currently available quality-of-service.

17. A method as claimed in Claim 16, wherein the quality-of-service includes an indication of a communications bandwidth for communicating data to the mobile user equipment, the method comprising
providing an indication that a predetermined communications bandwidth is currently available, the communicating the content data to the mobile unit comprising
communicating the content data to the user equipment in a form which can be supported by the predetermined communications bandwidth.

18. A method as claimed in Claim 16, wherein the quality-of-service includes an indication of a current communications bandwidth for communicating data to the mobile user equipment, the method comprising
providing an indication that a predetermined communications bandwidth is currently available, the communicating the content data to the mobile unit comprising
adapting the representation of the content data in accordance with the currently experienced communications bandwidth.

19. A method as claimed in Claim 16, 17 or 18, comprising
providing an indication of a current location of the mobile user equipment, and
communicating selectively in response to the location indication content data items to the mobile user equipment in accordance with the location information, the content data being selectively provided in accordance with a current location of the mobile user equipment.

20. A system for pushing content information to a mobile user equipment via at least one access network, communication with the mobile user equipment via the access network being effected using the internet protocol, the system comprising
an applications server operable to provide data representing the content information for communication to the mobile user equipment, and
a push proxy operable to maintain a current internet protocol address of the mobile user equipment, the push proxy being operable to provide an indication of the location of the mobile user equipment based upon the current internet protocol address of the mobile user equipment.

21. A system as claimed in Claim 20, wherein the internet protocol address is one of the home address of the mobile or a care-of-address provided following a change of affiliation of the mobile from one network to another.

22. A push proxy for providing a facility for transmitting content information provided by an applications server to a mobile user equipment via at least one access network, communication with the mobile user equipment via the access network being effected using the internet protocol, the push proxy being operable
to maintain a current internet protocol address of the mobile user equipment, and
to provide an indication of the location of the mobile user equipment based upon the current internet protocol address of the mobile user equipment to the applications server, whereby the applications server can select information content for communicating to the mobile in accordance with the location of the mobile.

23. A push proxy as claimed in Claim 22, wherein the internet protocol address is one of the home address of the mobile or a care-of-address provided following a change of affiliation of the mobile from one network to another.

24. A method for pushing content information to a mobile user equipment via at least one access network, communication with the mobile user equipment via the access network being effected using the internet protocol, the method comprising
providing data representing the content information for communication to the mobile user equipment,
maintaining a current internet protocol address of the mobile user equipment,
determining an indication of a location of the mobile user equipment based upon the current internet protocol address of the mobile user equipment, and
selectively communicating the content information in accordance with the location indication, the content information being selected in accordance with the location of the mobile user equipment.

25. A mobile user equipment including a plurality of access devices, each of the access devices providing a facility for receiving data from an access network, and an access network evaluation application operable
to determine, for at least one of the plurality of access devices, a current quality of service which is available via the access network from which the access device is arranged to receive data, and
to generate an access network evaluation message providing information pertaining to the current quality of service determined for the access network, and
to communicate the access network evaluation message to a push proxy.

26. A mobile user equipment as claimed in Claim 25, wherein the access network evaluation message is formed as an Internet Packet and communicated to the push proxy using an Internet Protocol.

27. A computer program providing computer executable instructions, which when loaded on to a data processor configures the data processor to operate as a push proxy according to any of Claims 7 to 11, 22 and 23.

28. A computer program providing computer executable instructions, which when loaded on to a server, configures the server to operate as an applications server according to any of Claims 12 to 15.
